Europäisches Patentamt

European Patent Office

Office européen des brevets

(11) Publication number: **0 127 416**
**B1**

(12)                                    **EUROPEAN PATENT SPECIFICATION**

(45) Date of publication of patent specification: **10.01.90**

(51) Int. Cl.⁵: **B 23 B 27/14,** B 23 P 15/30

(21) Application number: **84303432.3**

(22) Date of filing: **21.05.84**

(54) **Cutting tool and the production thereof and use of the same.**

(30) Priority: **27.05.83 JP 94743/83**

(43) Date of publication of application:
**05.12.84 Bulletin 84/49**

(45) Publication of the grant of the patent:
**10.01.90 Bulletin 90/02**

(84) Designated Contracting States:
**DE FR GB IT NL SE**

(56) References cited:
**EP-A-0 041 266**
**CH-A- 305 189**
**GB-A-1 247 831**

**PATENTS ABSTRACTS OF JAPAN, vol. 7, no. 29
(M-191) 1174r, 5th February 1983; & JP - A - 57
184 616 (FUJIKOSHI K.K.) 13-11-1982**

(73) Proprietor: **SUMITOMO ELECTRIC INDUSTRIES
LIMITED
No. 15, Kitahama 5-chome Higashi-ku
Osaka-shi Osaka 541 (JP)**

(72) Inventor: **Fujii, Hiroshi
20-3, Aza-Kitunebora Oaza-Yazako Nagate-ku
Aichi-gun Aichi-ken (JP)**
Inventor: **Hara, Akio c/o Itami Works
Sumitomo Electric Ind. Ltd. 1-1, Koyakita 1-
chome
Itami-shi Hyogo (JP)**
Inventor: **Kobayashi,Mitsunori c/o Itami Works
Sumitomo Electric Ind. Ltd. 1-1, Koyakita 1-
chome
Itami-shi Hyogo (JP)**
Inventor: **Mori, Yoshikatsu c/o Itami Works
Sumitomo Electric Ind. Ltd. 1-1, Koyakita 1-
chome
Itami-shi Hyogo (JP)**

(74) Representative: **Bizley, Richard Edward et al
BOULT, WADE & TENNANT 27 Furnival Street
London EC4A 1PQ (GB)**

Courier Press, Leamington Spa, England.

## Description

This invention relates to coated hard metal tools suitable for use in the cutting of metals, for example, turning, milling, threading, drilling or boring, and a process for producing the same. The coated hard metal used herein usually comprises a substrate of a cemented carbide consisting of e.g. WC, TiC or TaC and an iron group metal or a substrate of hard sintered alloy such as cermet consisting predominantly of e.g. TiC or TiN and a coating layer provided thereon consisting of a carbide, nitride, carboxide, carbonitride, oxide or solid solution thereof of a Group IVa, Va or VIa element of the Periodic Table, Al, Zr or the like, the coating layer having a higher hardness and wear resistance than the substrate.

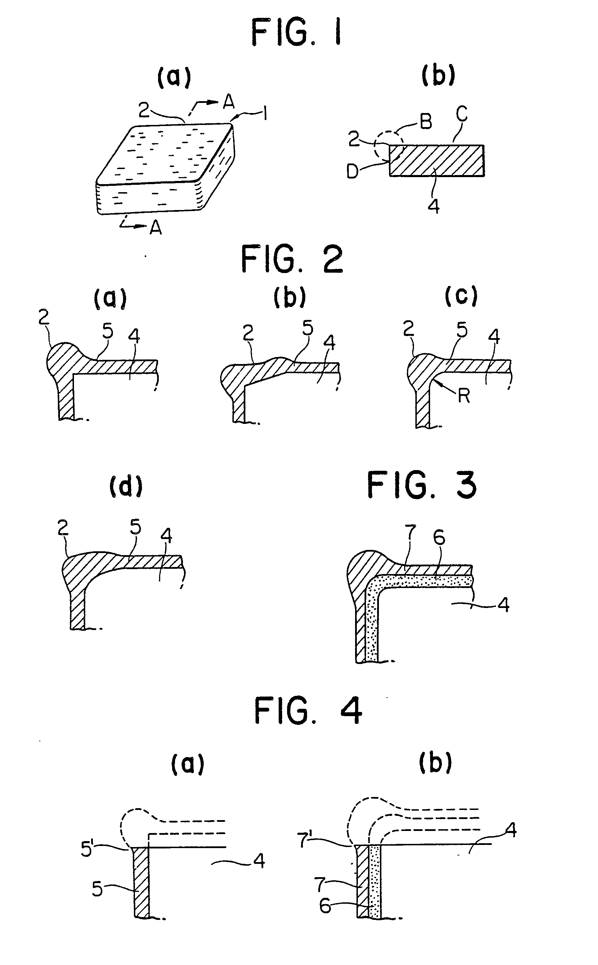

In the field of cutting metals, working conditions have become severer with the years and it has been required for cutting tools used to this end to have increased hardness, wear resistance and heat resistance. Cemented carbide tools are capable of satisfying these requirements to some extent, but the use of tools of cemented carbides with various hard coating layers has lately been spreading. A typical form of such a tool is shown in Fig. 1 in which a square insert is fixed to a holder. This is generally called a throwaway insert which is to be thrown away to permit an exchange for a new insert after using the eight cutting edge corners. In these coated cemented carbide tools, the surface of the cemented carbide tip 4 is ordinarily coated by the CVD method, PVD method or the like. Fig. 1(b) is a cross-sectional view of insert 1 along line A—A and Fig. 2 and Fig. 3 are enlarged views of cutting edges 2 near dotted line B. As shown in these figures, the coated cemented carbide inserts of the prior art each have a thicker part near the cutting edge 2 than at other parts, which differs somewhat depending upon the shape of the cutting edge. When the coating film is $Al_2O_3$, in particular, that part is usually thicker. In general, if the coating film is thicker, the wear resistance is increased, but the toughness is lowered and chipping tends to occur. That is, inserts having a coating layer near the cutting edge as shown in Fig. 2 and Fig. 3 meet with the drawback that deterioration of the finished surface of a workpiece is caused by the disorder of wearing due to a lowering in the toughness, breakage of the cutting edge and micro-chipping.

Various proposals have been made so as to overcome the above drawback. Thus, for example, Japanese Patent Publication No. 37553/1973 describes a method for making a cemented carbide cutting tool comprising forming a coating layer consisting predominantly of TiC on the whole surface of a cemented carbide insert and removing by grinding the coating layer on the land between the cutting edge and a groove for chip breaking, retaining the coating layer on only the groove for chip breaking. However, this method has not been put to practical use yet, because it cannot be applied to inserts without a chip breaker and inserts with a bumpy chip breaker, and it encounters problems that the cutting edge is unfavourably affected by chips occurring by grinding and cutting edges 5' and 7' shown in Fig. 4 are brittle due to the sharpness caused by grinding only the rake face. These problems similarly cannot be solved by a similar method which is described in Japanese Patent Application No. 92732/1971.

British Patent No. 1247831 describes an insert for machining steel, for example, in which an insert body of sintered hard metal alloy has a coating layer of carbide of higher wear resistance than the insert body. In one embodiment the coating layer covers the insert faces but leaves free the cutting edge or edges of the insert.

In the prior art, therefore, the strength of an edge can be increased to some extent, but resistance is not improved.

Thus, in accordance with the present invention there is provided a cutting tool having a cutting edge and including a substrate comprising a sintered hard metal or alloy and a coating film provided thereon comprising a material of greater hardness than the substrate, the coating film near the cutting edge being thinned by at least 10% of the thickness of the coating film or removed towards the rake face and the flank face, the width of the coating film thinned or removed being larger at the rake face side than at the flank face side. In this way not only edge strength but also wear resistance is improved.

The present invention thus enables the provision of a coated cemented carbide cutter for turning, milling, threading, drilling and boring machines.

It is a further aspect of the present invention to provide a process for producing a coated cemented carbide cutting tool with excellent stability and long life by controlling the thickness of the coating film at the cutting edge part of the coated cemented carbide tool. Accordingly the present invention also provides a process for the production of a cutting tool comprising subjecting a substrate consisting of a sintered hard metal or alloy to a coating treatment to provide a coating film thereon consisting of a material of greater hardness than the substrate and to a honing treatment in such a manner that the resulting coating film near the cutting edge is thinned by at least 10% of the thickness of the coating film or removed towards both the rake face and the flank face, the honing treatment being carried out by arranging a number of the coated substrates on a rotary disk in such a manner that the rake faces are thereabove and contacting revolving flexible grinding means against the edge parts of the coated substrates from the rake face thereby lapping simultaneously the rake face and flank face with a greater width of the coating film being thinned or removed at the rake face side than at the flank face side.

The accompanying drawings serve to illustrate the principle and merits of the present invention in more detail.

Fig. 1 (a) is a perspective view of a throwaway insert of cemented carbide in general form and Fig. 1 (b) is a cross-sectional view along line A—A of Fig. 1 (a).

Fig. 2 to Fig. 3 are enlarged cross sectional views of part B in Fig. 1 (b) showing various coated cemented carbide inserts of the prior art.

Fig. 4 (a) and (b) are enlarged cross-sectional views near the cutting edges of coated cement carbide inserts subjected to edge working according to the prior art.

Fig. 5 and Fig. 6 are enlarged cross-sectional views near the cutting edge of coated cemented carbide inserts of the present invention.

Fig. 7 shows a cross-sectional view of a workpiece used for testing an insert of the present invention, and shows the position of the insert.

In the present invention, the hard metal preferably comprises at least one carbide, optionally with at least one nitride, of Group IVa, Va and VIa elements of the Periodic Table and a metal binder selected from the iron group metals, and has at least one coating layer having a greater hardness than the hard metal and preferably consisting of at least one of the carbides, nitrides, carboxides, carbonitrides and oxides of Group IVa, Va and VIa elements of the Periodic Table and A1, and solid solutions thereof.

In the tool of the present invention not only is the toughness markedly improved, but also the wear resistance is raised unexpectedly compared to the prior art, while in the prior art method wherein the coating film on only rake face C is removed, only toughness is somewhat improved. The meritorious effect of the present invention is remarkable when the minimum value t of the film thickness near the cutting edge is at most 60% as shown in Fig. 6 (a) and considerable even in the case of at most 90%, and it can be maintained when substrate 4 is partly exposed as shown in Fig. 6 (b) and (c). In Fig. 3, inner layer 6 consists generally of at least one hard material selected from carbides, nitrides, oxides and solid solutions thereof of metals such as Ti and has substantially a uniform thickness, and outer layer 7 is a layer consisting predominantly of an oxide or oxynitride of Al or Zr which tends to be maximized in film thickness near the cutting edge. In a cutting tool having a multilayer coating of an oxide or oxynitride of Al or Zr and a hard compound of Ti in combination, therefore, the maximized film is thinned near the cutting edge or removed to expose the substrate according to the present invention.

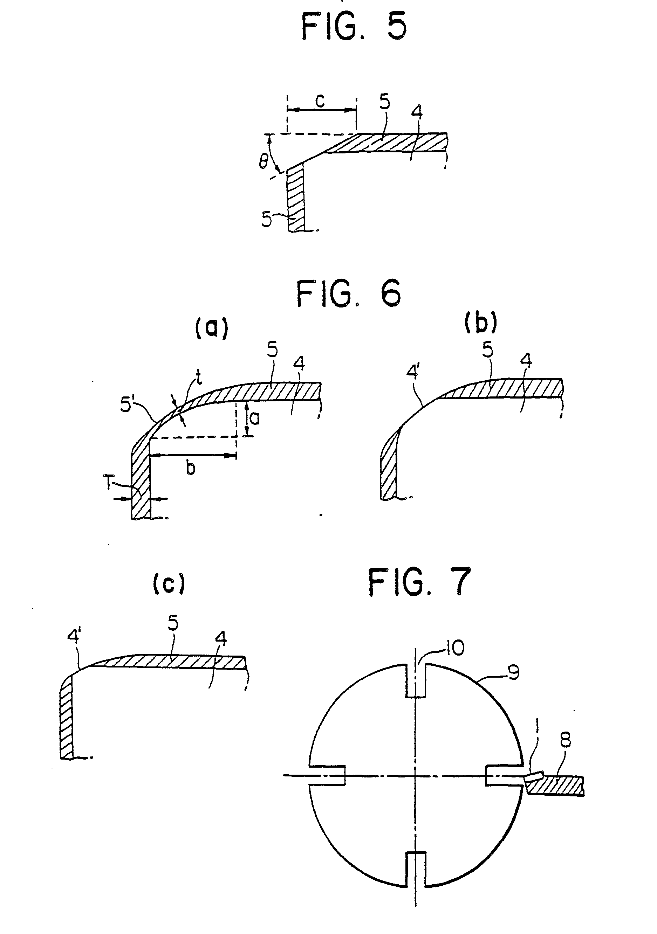

Fig. 5 and Fig. 6(a) to (c) are enlarged cross-sectional views of throwaway inserts near the cutting edge as embodiments of the coated cemented carbide cutting tool according to the present invention. Referring to Fig. 5 (a), the cutting edge of substrate 4 non-treated is coated as shown in Fig. 2 (a) and coating film 5 is removed at an angle of $\theta$ in such a manner that the film thickness is gradually increased from the exposed part of substrate 4 towards both the rake face and the flank face.

Referring to Fig. 6, the cutting edge of substrate 4 is subjected to rounded honing in such a manner that the rake face is more worked than is the flank as shown in Fig. 2 (d), after which hard coating film 5 is formed and then subjected to working using an elastic grindstone, thus obtaining cutting inserts of the present invention. Fig. 6 (a) shows an example wherein a coating film with a thickness of t is retained near the cutting edge to satisfy the relationship of $t<T$ for the maximum coating thickness T. $(t/T) \times 100$ is at most 90, more preferably at most 60. Fig. 6 (b) and (c) are examples wherein $t = 0$ and substrate 4' is exposed, and in the case of (b), the edge is made round before coating, while in the case of (c) a sharp edge is held before coating.

In Fig. 5, working is carried out by chamfer-honing, but a barrel treatment after coating is preferred. Furthermore, it is more preferred in view of the lowered yield due to breakage of the cutting edge and operational efficiency to arrange a number of coated inserts on a rotary disk in such a manner that the rake faces are thereabove, and to push an elastic grindstone containing grinding grains such as SiC, e.g. a buff or brush consisting of a resin with grinding grains, revolving against the edge parts of the inserts from the rake face, thus lapping simultaneously the rake face and flank face and smoothly thinning the film on and near the cutting edge. According to this method, the film on the side of the rake face is made thinner than on the side of the flank face, the sides being separated by the cutting edge as a boundary, so wear resistance can be held by the film thickness of the flank side and toughness can be held by the thinner film on the rake side. The resulting cutting insert exhibits a particularly excellent performance.

The following Examples are given in order to illustrate the present invention in detail without limiting the same.

## Examples

Various cemented carbide inserts having a Form No. of ISO and SNMA 120408 were coated with various hard coating films shown in Table 1. Edge treatments before coating the cemented carbide inserts were carried out as follows:

(i) No edge treatment as shown in Fig. 2 (a)

(ii) Edge treatment of R = 0.05 as shown in Fig. 2 (c)

(iii) Edge treatment to give a substrate of a = 0.03 mm and b = 0.06 mm as shown in Fig. 6 (a).

Edge treatments after coating were carried out as follows:

(I) No edge treatment

(II) Edge treatment by chamfering to give $\theta = 20°$ and C = 0.09 mm in Fig. 5

(III) Edge treatment by barrel polishing to give $t<T$

(IV) Edge treatment by lapping with an elastic grindstone to give $t<T$.

(V) Edge treatment by lapping with a brush to give $t<T$

The above described various coated cemented carbide inserts were subjected to tests for toughness and wear resistance and the results are shown in Table 2 with Coating Film Thickness Ratio after coating, $(t/T) \times 100$. The test conditions are as follows:

Test Conditions of Toughness
Workpiece: round rod with four grooves of SCM 435 (Hs 36) as shown in Fig. 7
Holder: PSBNR 2625—43
Cutting Speed: 80 m/min
Cutting Depth: 2 mm
Feed: 0.12—0.28 mm/rev (same material group: under same condition)
Assessment: number of impacts till breakage (average value of eight tests)

Test Conditions of Wear Resistance
Workpiece: round rod of SCM 415 (Hs 26)
Holder: PSBNR 2525—43
Cutting speed: 230 m/min
Cutting Depth: 2 mm
Feed: 0.3 mm/rev
Time: 15 min
Assessment: measurement of flank wear width (mm)

TABLE 1

| No. | Coating Film (Film Thickness: value on plane part) | Substrate |
|---|---|---|
| E | Titanium Carbide (8 µm) Single Layer | ISO P 30 (Cemented Carbide) |
| F | Titanium Nitride (1 µm)/Titanium Carbonitride (3 µm)/Titanium Carbide (4 µm) 3 Layers | ISO P 30 (Cemented Carbide) |
| G | Titanium Oxynitride (1 µm)/Alumina (1.5 µm)/Titanium Carbide (5.5 µm) 3 Layers | ISO M 20 (Cemented Carbide) |
| H | Titanium Nitride (3 µm) Single Layer | ISO P 10 (Nitride-containing Cement) |
| I | Zirconia (0.5 µm)/Aluminum Oxynitride (1 µm)/Titanium Carbide (6 µm) | ISO M 20 (Cemented Carbide) |
| J | Alumina (1 µm)/Hafnium Nitride (1 µm)/Titanium Carbide (1 µm) 3 Layers | ISO M 20 (Cemented Carbide) |

TABLE 2

| No. | Material | Treatment Before Coating | Treatment After Coating | Film Thickness Ratio $(t/T) \times 100$ | Toughness Test number of impact | Wear Resistance Test flank wear (mm) |
|---|---|---|---|---|---|---|
| (1) | | ii | I | 105 | 62 | 0.43 |
| (2) | | i | II | 0 | 175 | 0.34 |
| (3) | | ii | III | 70 | 193 | 0.28 |
| (4) | E | ii | IV | 95 | 86 | 0.41 |
| (5) | | ii | IV | 90 | 186 | 0.36 |
| (6) | | ii | IV | 60 | 483 | 0.29 |
| (7) | | ii | V | 40 | 539 | 0.28 |
| (8) | | i | IV | 0 | 782 | 0.23 |
| (9) | | ii | I | 110 | 55 | 0.41 |
| (10) | | i | II | 0 | 180 | 0.33 |
| (11) | | ii | III | 70 | 168 | 0.29 |
| (12) | | ii | III | 60 | 406 | 0.27 |
| (13) | F | ii | IV | 95 | 64 | 0.40 |
| (14) | | ii | IV | 55 | 149 | 0.24 |
| (15) | | ii | IV | 0 | 444 | 0.23 |
| (16) | | i | V | 0 | 724 | 0.21 |
| (17) | | iii | I | 140 | 33 | 0.35 |
| (18) | | i | II | 0 | 229 | 0.29 |
| (19) | G | iii | III | 50 | 233 | 0.25 |
| (20) | | iii | IV | 50 | 402 | 0.20 |
| (21) | | i | IV | 0 | 413 | 0.20 |
| (22) | | ii | I | 105 | 6 | broken |
| (23) | | i | II | 0 | 150 | 0.22 |
| (24) | H | ii | III | 0 | 175 | 0.16 |
| (25) | | i | IV | 0 | 207 | 0.13 |
| (26) | | ii | I | 155 | 67 | 0.46 |
| (27) | I | ii | IV | 80 | 289 | 0.38 |
| (28) | | ii | IV | 60 | 374 | 0.30 |
| (29) | | i | IV | 0 | 412 | 0.27 |
| (30) | | iii | I | 145 | 91 | 0.49 |
| (31) | J | iii | IV | 100 | 138 | 0.47 |
| (32) | | iii | IV | 0 | 351 | 0.33 |
| (33) | | i | IV | 0 | 548 | 0.32 |

Referring to Table 2, Nos. 1, 4, 9, 13, 17, 22, 26, 30 and 31 have $t/T$ as 100>90. The other inserts exhibit excellent toughness as well as excellent wear resistance.

**Claims**

1. A cutting tool having a cutting edge and including a substrate (4) comprising a sintered hard metal or alloy and a coating film (5) provided thereon comprising a material of greater hardness than the substrate, the coating film (5) near the cutting edge (5′) being thinned by at least 10% of the thickness of the coating film (5) or removed towards the rake face (C) and the flank face (D), the width of the coating film (5) thinned or removed being larger at the rake face side (C) than at the flank face side (D).

2. A tool as claimed in claim 1, wherein the coating film (5) near the cutting edge (5′) thins continuously in both the rake face direction (C) and the flank face direction (D).

3. A tool as claimed in claim 1 or claim 2 wherein the sintered hard metal or alloy comprises at least one carbide, optionally with at least one nitride of Group IVa, Va and VIa elements of the Periodic Table and optionally a metal binder selected from the iron group metals.

4. A tool as claimed in any one of claims 1 to 3, wherein the material of greater hardness comprises at least one of the carbides, nitrides, carboxides, carbinitrides or oxides of Group IVa, Va and VIa elements of the Periodic Table and aluminium, and solid solutions thereof.

5. A tool as claimed in any one of claims 1 to 4, wherein the coating film (5) comprises at least two layers, at least one of which consists predominantly of at least one of the oxides and oxynitrides of aluminium and zirconium.

6. A tool as claimed in claim 1, wherein the coating film (5) is formed by a CVD method or PVD method.

7. A process for the production of a cutting tool comprising subjecting a substrate (4) consisting of a sintered hard metal or alloy to a coating treatment to provide a coating film (5) thereon consisting of a material of greater hardness than the substrate and to a honing treatment in such a manner that the resulting coating film (5) near the cutting edge (5') is thinned by at least 10% of the thickness of the coating film (5) or removed towards both the rake face (C) and the flank face (D), the honing treatment being carried out by arranging a number of the coated substrates (4) on a rotary disk in such a manner that the rake faces (C) are thereabove and contacting revolving flexible grinding means against the edge parts of the coated substrates (4) from the rake face (C) thereby lapping simultaneously the rake face (C) and flank face (D) with a greater width of the coating film (5) being thinned or removed at the rake face side (C) than at the flank face side (D).

8. A process as claimed in claim 7, wherein the grinding means is a buff or brush comprising a resin with grinding grains.

9. A process as claimed in claim 7 or claim 8 wherein the coating film (5) is thinned or removed continuously.

10. A method of cutting a metal which comprises subjecting the metal to the cutting action of a tool as claimed in any one of claims 1 to 6.

**Patentansprüche**

1. Schneidwerkzeug mit einer Schneidkante und einem Substrat (4), enthaltend ein gesintertes Hartmetall oder eine Hartmetall-Legierung und einen darauf angebrachten Überzugsfilm (5), der ein Material mit einer größeren Härte als das Substrat enthält, wobei der Überzugsfilm (5) in der Nähe der Schneidkante zu der Spanfläche (C) und zu der Seitenfläche (D) hin um mindestens 10% der Dicke des Überzugsfilms (5) verdünnt oder entfernt ist, wobei die Breite des verdünnten oder entfernten Überzugsfilms (5) an der Seite der Spanfläche (C) größer ist als an der Seite der Seitenfläche (D).

2. Werkzeug nach Anspruch 1, worin der Überzugsfilm (5) in der Nähe der Schneidkante (5') kontinuierlich sowohl in Richtung der Spanfläche (C) als auch in Richtung der Seitenfläche (D) dünner wird.

3. Werkzeug nach Anspruch 1 oder 2, worin das gesinterte Hartmetall oder die Hartmetall-Legierung mindestens ein Carbid, gegebenenfalls mit mindestens einem Nitrid, von Elementen der Gruppen IVa, Va und VIa des Periodensystems und gegebenenfalls ein metallisches Bindemittel, ausgewählt aus den Metallen der Eisengruppe, enthält.

4. Werkzeug nach einem der Ansprüche 1 bis 3, worin das Material mit der größeren Härte mindestens ein Carbid, Nitrid, Carboxid, Carbonitrid oder -oxid von Elementen der Gruppen IVa, Va und VIa des Periodensystems und Aluminium sowie deren feste Lösungen enthält.

5. Werkzeug nach einem der Ansprüche 1 bis 4, worin der Überzugsfilm (5) mindestens zwei Schichten enthält, von denen mindestens eine überwiegend aus mindestens einem der Oxide und Oxinitride des Aluminiums und des Zirkons besteht.

6. Werkzeug nach Anspruch 1, worin der Überzugsfilm (5) nach einem CVD- oder PVD-Verfahren gebildet ist.

7. Verfahren zur Herstellung eines Schneidwerkzeugs, wobei ein Substrat (4), bestehend aus einem gesinterten Hartmetall oder einer Hartmetall-Legierung einer Beschichtungsbehandlung unterzogen wird, um darauf einen Überzugsfilm (5) anzubringen, der aus einem Material mit größerer Härte als das Substrat besteht, anschließend einer Honbehandlung unterzogen wird, derart, daß der erhaltene Überzugsfilm (5) in der Nähe der Schneidkante sowohl zu der Spanfläche (C) als auch zu der Seitenfläche (D) hin um mindestens 10% der Dicke des Überzugsfilms (5) verdünnt oder entfernt wird, wobei die Honbehandlung so durchgeführt wird, daß eine Anzahl von beschichten Substraten (4) so auf einer Drehscheibe angeordnet wird, daß die Spanflächen (C) darüberliegen und daß sich drehende, flexible Schleifeinrichtungen mit den Kantenteilen des beschichteten Substrats (4) von der Spanfläche (C) her in Berührung gebracht werden, wobei gleichzeitig die Spanfläche (C) und die Seitenfläche (D) abgeschliffen werden und wobei der Überzugsfilm (5) auf der Seite der Spanfläche (C) mit einer größeren Breite als auf der Seite der Seitenfläche (D) verdünnt oder entfernt wird.

8. Verfahren nach Anspruch 7, worin die Schleifeinrichtung eine Polierscheibe oder eine Bürste, enthaltend ein Harz mit Schleifkörnern, darstellt.

9. Verfahren nach Anspruch 7 oder 8, worin der Überzugsfilm (5) kontinuierlich verdünnt oder entfernt wird.

10. Verfahren zum Schneiden eines Metalls, wobei das Metall der Schneidwirkung eines Werkzeugs nach einem der Ansprüche 1 bis 6 ausgesetzt wird.

**Revendications**

1. Outil de coupe présentant un bord coupant et comportant un support (4) comprenant un métal ou alliage dur fritté et un film enduit (5) prévu sur celui-ci comprenant un matériau de plus grande dureté que le support, le film enduit (5) près du bord coupant (5') étant aminci d'au moins 10% de l'épaisseur du film enduit (5) ou éliminé vers la face de dépouille (C) et la face latérale (D), la largeur du film enduit (5) aminci ou éliminé étant plus grande sur le côté de la face de dépouille (C) que sur le côté de la face latérale (D).

2. Outil selon la revendication 1, dans lequel le film enduit (5) près du bord coupant (5') s'amincit de manière continue à la fois dans le sens de la face de dépouille (C) et les sens de la face latérale (D).

3. Outil selon la revendication 1 ou 2, dans lequel le métal ou alliage dur fritté comprend au moins un carbure, avec en option au moins un nitrure parmi les éléments du Groupe IVa, Va et VIa du Tableau Périodique et en option un liant métallique choisi parmi les métaux du groupe fer.

4. Outil selon l'une quelconque des revendications 1 à 3, dans lequel le matériau de plus grande dureté comprend au moins un des carbures, nitrures, oxydes de carbure, nitrures de carbure ou oxydes parmi les éléments de Groupe IVa, Va et VIa du Tableau Périodique et de l'aluminium, et solutions solides de celui-ci.

5. Outil selon l'une quelconque des revendications 1 à 4, dans lequel le film enduit (5) comprend au moins deux couches, dont au moins une consiste de façon prédominante en au moins un des oxydes et oxydes de nitrure d'aluminium et de zirconium.

6. Outil selon la revendication 1, dans lequel le film enduit (5) est formé par un procédé CVD ou un procédé PVD.

7. Procédé pour la production d'un outil de coupe comprenant la soumission d'un support (4) consistant en un métal ou alliage dur fritté à une enduction afion de fournir un film enduit (5) sur celui-ci consistant en un matériau de plus grande dureté que le support et à un pierrage de telle façon que le film enduit (5) obtenu près du bord coupant (5') soit aminci d'au moins 10% de l'épaisseur du film enduit (5) ou éliminé à la fois vers la face de dépouille (C) et la face latérale (D), le pierrage étant effectué en disposant un certain nombre de supports enduits (4) sur un disque rotatif de telle façon que les faces de dépouille (C) se trouvant sur le dessus de celui-ci et en mettant en contact un moyen de meulage flexible rotatif contre les bords des supports enduits (4) à partir de la face de dépouille (C) afin de roder simultanément la face de dépouille (C) et la face latérale (D) avec une plus grande largeur du film enduit (5) étant aminci ou éliminé sur le côté de la face de dépouille (C) que sur le côté de la face latérale (D).

8. Procédé selon la revendication 7, dans lequel le moyen de meulage est un disque toile ou une brosse comprenant une résine avec des grains de meulage.

9. Procédé selon la revendication 7 ou 8, dans lequel le film enduit (5) est aminci ou éliminé de façon continue.

10. Méthode de découpe d'un métal qui comprend la soumission du métal à l'action coupante d'un outil selon l'une quelconque des revendications 1 à 6.

EP 0 127 416 B1

# FIG. 1

**(a)**

**(b)**

# FIG. 2

**(a)**

**(b)**

**(c)**

**(d)**

# FIG. 3

# FIG. 4

**(a)**

**(b)**

1

EP 0 127 416 B1

# FIG. 5

# FIG. 6

(a)

(b)

(c)

# FIG. 7

2